# EUROPEAN PATENT APPLICATION

(11) **EP 1 621 967 A1**
(43) Date of publication of application: **01.02.2006**
(21) Application number: 04017559.8
(22) Date of filing: 23.07.2004
(51) Int. Cl.: G06F 1/16

(54) **Notebook computer with an easily disassembled main board**

(71) Applicant: VAC Corporation, Taipei (TW)
(72) Inventor: Hua, Chung-Cheng, Taipei (TW)
(74) Representative: Viering, Jentschura & Partner

(57) **Abstract**

A notebook computer with an easily disassembled main board has a main frame and a display panel. The main frame has a frame for receiving a plurality of electronic components. A main board is disposed under the frame, and a top shell and a bottom shell cover the frame. The frame has a top plate having a slit. A plurality of electrical connectors are formed on a top surface of the main board, and extends out of the slit. The display panel is pivotably mounted on the frame. Bus lines of the electronic components extend above the main board, and connect to the electrical connectors; thereby the bus lines and the main board can be disassembled easily.

## Description

### BACKGROUND OF THE INVENTION

### 1. Field of the Invention

The present invention relates to a notebook computer with an easily disassembled main board, and especially to a notebook computer having a redesigned main board allowing easy disassembly by a user disassembles.

### 2. Description of Related Art

When equipment of a conventional notebook computer becomes obsolete, it must be replaced without any extensions in order to get a new notebook computer. Conversely, the notebook computer has some extension slots to connect with peripheral equipment, but a main board cannot be updated at all. The reasons are that the electronic components are intricate and formed on the main frame shell across or overlapping, and bus lines which connect the electronic components to the main board are disposed all over the main board in a dispersed manner and may even overlap with the electronic components. They must be disassembled carefully even by a maintenance person, or they cannot be used any more.

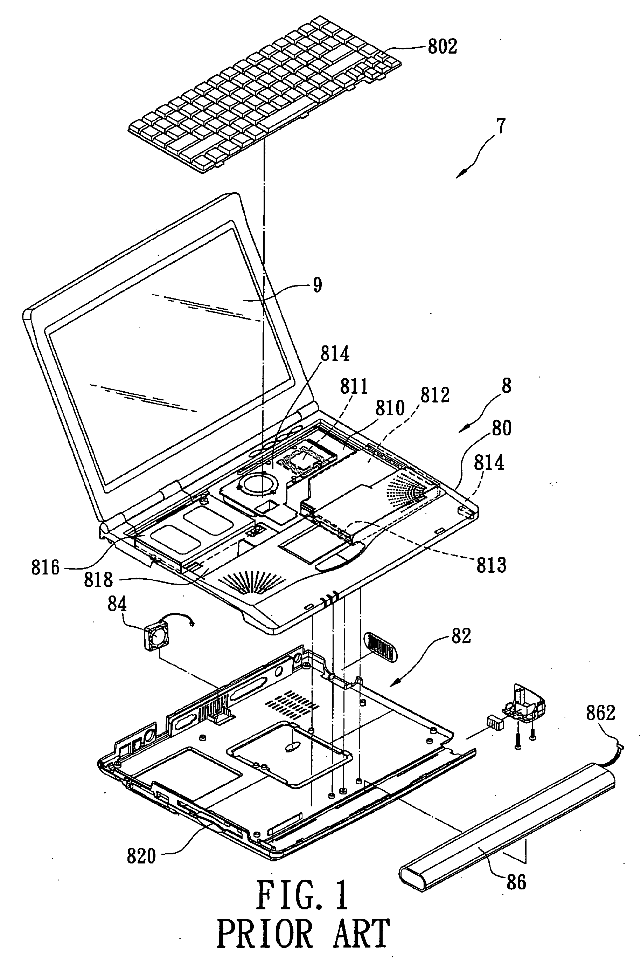

Fig. 1 is an exploded, perspective view of a conventional notebook computer disclosed in TW application No. 902-18795. The notebook computer 7 has a main frame 8 and a liquid crystal display panel 9. The main frame 8 comprises a top shell 80, a bottom shell 82, a main board 81 fixed on the top shell 80, a fan 84 assembled onto the bottom shell 82, and a battery 86 disposed on a front end of the main frame 8. The main board 81 and the top shell 8 are substantially the same size. The main board 81 has a CPU 810, a heat sink device 811 disposed on the CPU 810, a CD-ROM 812, a hard disk 816, a floppy disk 818 mounted thereon. The bottom shell 82 is formed with a slot 820.

The electronic components mentioned above are mounted on the main board 8 in a dispersed manner. For example, a power connector of the fan 84 is inserted in a top rim of the main board 8, an electrical connector 813 of the CD-ROM 812 is substantially mounted on a middle of the main board, and a power connector of the battery 86 is inserted into a socket 814 on a corner of the main board 8. Furthermore, connection points of the other electronic components and the main board 8 cannot be seen clearly at all; some overlap with the electronic components and some are shielded under the top shell 80. The electronic components are disposed on each corner of the main board 8 in a dispersed manner and may even be shielded by the other electronic components. The design is so intricate that it is not convenient to maintain and change the electronic components.

As can be seen from above description, the design of the conventional notebook computer is inconvenient and makes changing and maintaining the electronic components difficult, so it must be improved.

Therefore, a notebook computer with an easily disassembled main board that overcomes the above-mentioned problems is desired.

### SUMMARY OF THE INVENTION

An object of the present invention is to provide a notebook computer with an easily disassembled main board, and especially to provide a notebook computer having a redesigned main board allowing a user to disassemble it easily.

Another object of the present invention is to provide a notebook computer with an easily disassembled main board, in which the other electronic components are disassembled easily, too.

To achieve the above objects, a notebook computer with an easily disassembled main board includes a main frame and a display panel. The main frame has a frame for receiving a plurality of electronic components. A main board is disposed under the frame, and a top shell and a bottom shell cover the frame. The frame has a top plate having a slit. A plurality of electrical connectors is formed on a top surface of the main board, and extends out of the slit. The display panel is pivotably mounted on the frame. Bus lines of the electronic components extend above the main board, and connect to the electrical connectors, thereby the bus lines and the main board can be disassembled easily.

While the invention may be susceptible to embodiment in different forms, there is shown in the drawings, and herein will be described in detail, a specific embodiment with the understanding that the present disclosure is to be considered an exemplification of the principles of the invention, and is not intended to limit the invention to that as illustrated and described herein.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is an exploded, perspective view of a conventional notebook computer;
Fig. 2 is an exploded, perspective view of a notebook computer with an easily disassembled main board of the present invention;
Fig. 3 is an assembled, perspective view of the notebook computer with an easily disassembled main board of the present invention;
Fig. 4 is a top view of the notebook computer with an easily disassembled main board, wherein the keyboard is disassembled from the notebook computer;
Fig. 5 is a top view of the main board of the notebook computer of the present invention;
Fig. 6 is bottom view of the main board of the notebook computer of the present invention; and
Fig. 7 is an exploded, perspective view of the notebook computer when the notebook computer is inverted.

### DETAILED DESCRIPTION OF THE INVENTION

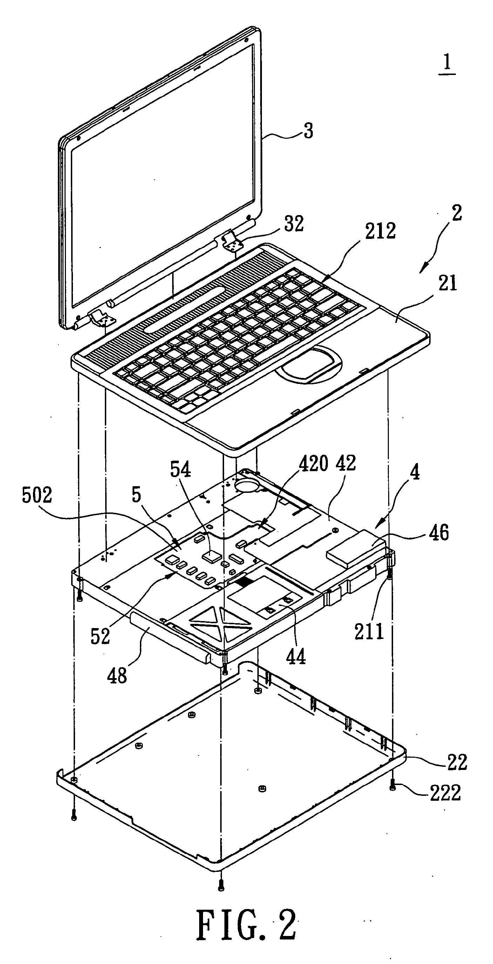

Fig. 2 is an exploded, perspective view of a notebook computer with an easily disassembled main board of the present invention. The notebook computer 1 comprises a main frame 2 and a display panel 3. The main frame 2 comprises a top shell 21, a bottom shell 22, and a frame 4 for receiving a plurality of electronic components. The top shell 21 and the bottom shell 22 are made of insulative material and are screwed onto the frame 4 by screws 211, 222, respectively. The top shell 21 of the main frame 2 has a keyboard 212, which is mounted detachably thereon. The bottom shell 22 is a beautified shell, which is formed integrally. The display panel 3 is pivotably mounted on a side of the frame 4.

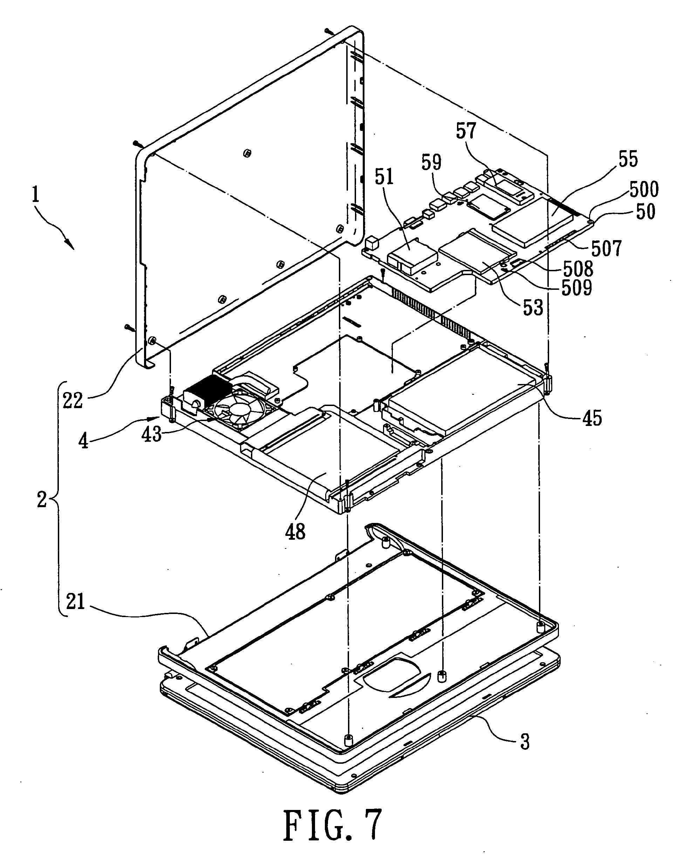

The frame 4 is cast from a light metallic material, and a magnesium alloy is preferable. The frame 4 made of a magnesium alloy is light, firm, conductive, shockproof, EMI free, and recyclable in accord with demands of environmental protection, has good heat sink performance, and allows the notebook computer to be assembled modularly and improves the manufacture efficiency. The frame 4 has a top plate 42, a touch panel 44 and a card reader 46. The top plate 42 is formed with an opening 420, which is substantially on middle of the top plate 42. A reverse side of the frame 4 is formed a plurality of receiving spaces (shown in Fig. 7) for receiving the main board 5 and a plurality of electronic components. The main board 5 is disposed on the reverse side of the frame 4. The main board 5 has a substrate 50. A top surface 502 of the substrate 50 is mounted with a plurality of electrical connectors 52 for electrically connecting the electronic components, respectively.

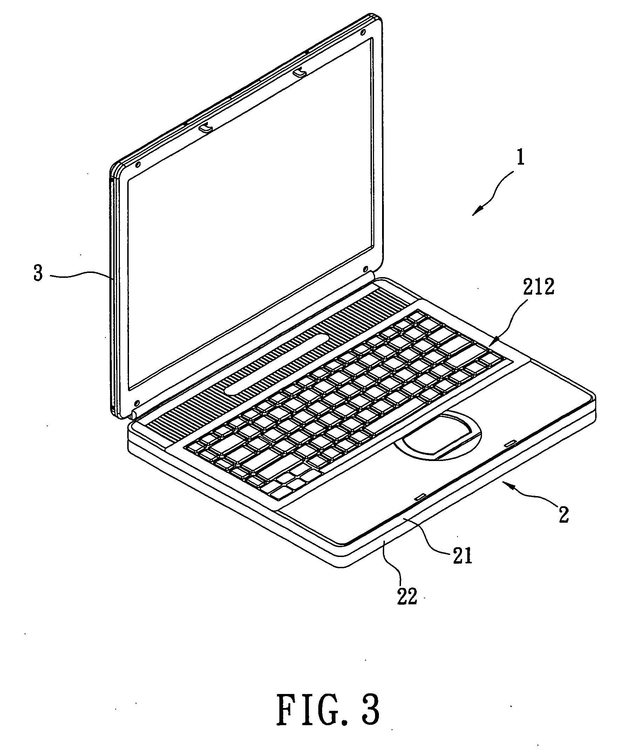

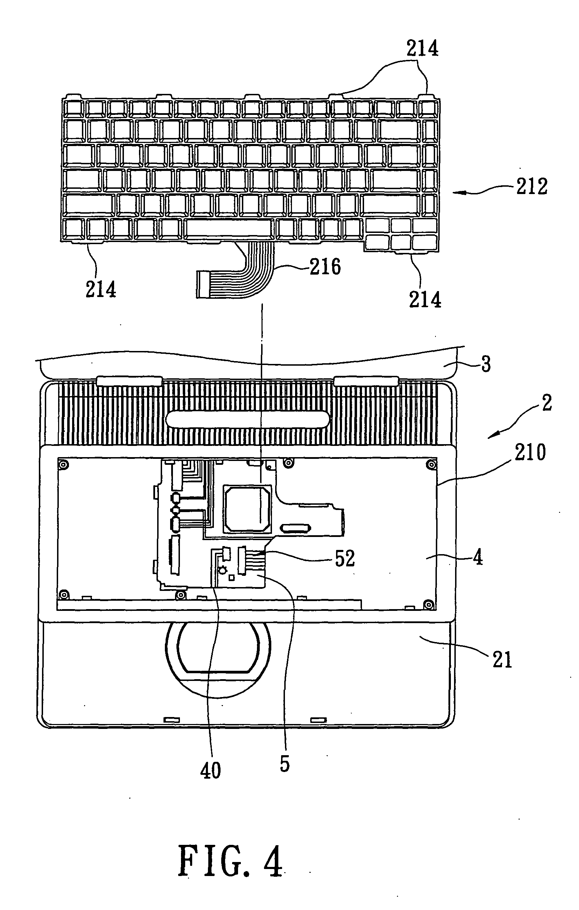

Fig. 3 and Fig. 4 are an assembled view of the notebook computer of the present invention and a top view of the notebook computer with a keyboard disassembled, respectively. The keyboard 212 is disposed above the opening 420 of the frame 4. The keyboard 212 has a plurality of protrusions 214, 216, which are formed on a top rim and a bottom rim, and engaged in a keyboard opening 210 of the top shell 21. Therefore, the keyboard 212 is easily disassembled from the top shell 21. The electrical connectors 52 can be seen clearly when the keyboard 212 is disassembled from above. The connection points between the electronic components and the main board 5, i.e. the electrical connectors 52, are concentrated above the main board 5 and exposed by the opening 420 of the frame 4. Bus lines of the electronic components extend above the main board 5 and connect to the electrical connectors 52, respectively. The electronic components are thus easily and conveniently disassembled from the main board 5.

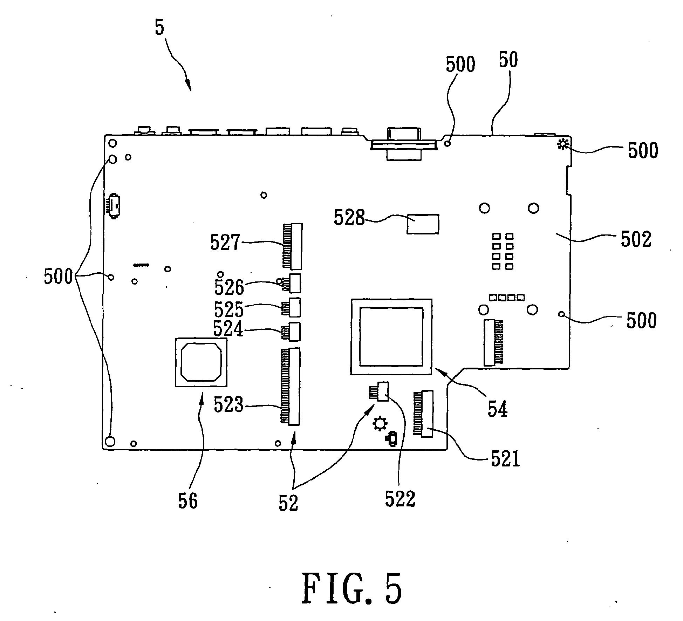

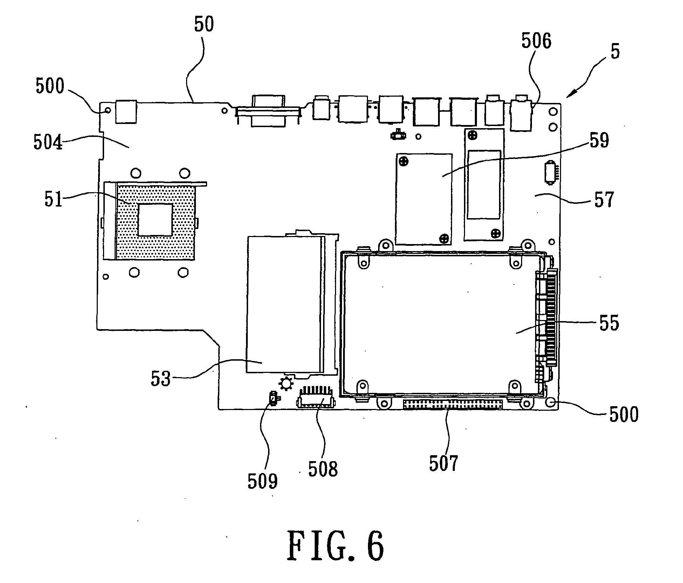

Fig. 5 and Fig. 6 are a top view and a bottom view of the main board of the notebook computer of the present invention, respectively. In the embodiment, the electrical connectors 52 of the main board 5 are substantially arranged in a rectangle. The top surface 502 of the main board 5 has a north bridge chip 54 and a south bridge chip 56. The north bridge chip 54 is mounted among the electrical connectors 52. The electrical connectors 52 comprise a card reader connector 521 for an electrical memory card, a touch panel connector 522, a keyboard connector 523, a LED connector 524, an internal microphone connector 525, a speaker connector 526, a display panel signal connector 527 and a display panel power connector 528.

Referring to Fig. 6, the main board 5 at least comprises a CPU connector 51, a memory 53, and a plurality of external slots 506 at a bottom surface 504 thereof. The external slots 506 includes, for example, a power socket, a USB socket, a microphone socket, an earphone socket, a network socket and an external display socket. The bottom surface 504 of the main board 5 may further have a hard disk 55, a wireless module 57, and a modem 59. The hard disk 55 is detachably mounted in the main board 5. The wireless module 57 is disposed adjacent to the rim of the main board 5 for transmitting and receiving signals to a wireless network conveniently.

Fig. 7 is an exploded, perspective view of the notebook computer when the notebook computer is inverted. The frame 4 is cast from a light metallic material, and a magnesium alloy is preferable. The frame 4 made of a magnesium alloy allows modular assembly of the notebook computer and improves the manufacture efficiency. The reverse side of the frame 4 has a plurality of receiving spaces for receiving the electronic components and the main board 5. The main board 5 is formed with a plurality of screw holes 500 in periphery thereof for being screwed onto the frame 4. The electronic components at least comprise a heat sink module 43, a data access device 48 and a battery 45. The heat sink module 43 has one end adjacent to the edges of the frame 4 to dissipate heat conveniently, and the other end is disposed on the CPU 51. The data access device 48 is, for example, a CD-ROM, a DVD-ROM or a Combo CD-ROM.

There are no blocks between the electronic components and the main board 5 when the bottom shell 22 is disassembled from the notebook computer 1. It is easy to assemble and disassemble even if the main board 5 has a plurality of electrical connectors on the bottom surface thereof. Referring to Fig. 6 again, a layout of a CD-ROM connector 507, a fan connector 508 and a battery connector 509 is very elastic.

The notebook computer with an easily disassembled main board of the present invention has the following advantages. First, the connectors are concentrated under the keyboard and exposed in a same place so that the user can change the main board easily. The user can even disassemble the electronic components and update them conveniently. Infinite update space and possibilities are thus provided. Second, the step of disassembling the main board is very simple; the top shell need not be removed to disassemble the connecting bus lines even is the main board is rotated and disposed in another angle. Third, all kinds of electrical components are seen on the bottom surface of the frame without overlapping when the bottom shell is disassembled simply. It is easy for the user itself to maintain, change or update the notebook computer, unlike the conventional notebook computer, which cannot be updated by the user easily. Fourth, breaking down the integrative sale mode and disassembling the main board, CPU, memory, hard disk, and CD-ROM are easy, and providing both sellers and consumers with flexible assembly and choices.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A notebook computer with an easily disassembled main board, the notebook computer comprising:
a main frame, comprising a frame for receiving a plurality of electronic components, a main board disposed under the frame, and a top shell and a bottom shell covering the frame, wherein the frame has a top plate having a slit, a plurality of electrical connectors extending out of the slit formed in a top surface of the main board; and
a display panel pivotably mounted on the frame;
wherein bus lines of the electronic components extend above the main board, and connect to the electrical connectors, the bus lines and the main board being disassembled easily.

2. The notebook computer with an easily disassembled main board as claimed in claim 1, wherein the top shell of the main board comprises a keyboard detachably mounted thereon and residing above the slit.

3. The notebook computer with an easily disassembled main board as claimed in claim 1, wherein the top surface of the main board comprises a north bridge chip and a south bridge chip, the north bridge chip formed between the plurality of electrical connectors.

4. The notebook computer with an easily disassembled main board as claimed in claim 1, wherein the bottom shell is a back shell formed integrally.

5. The notebook coniputer with an easily disassembled main board as claimed in claim 1, wherein a rear surface of the main board comprises a CPU, a memory and a plurality of external slots.

6. The notebook computer with an easily disassembled main board as claimed in claim 1, wherein a rear surface of the main board further comprises a hard disk, a wireless module and a modem.

7. The notebook computer with an easily disassembled main board as claimed in claim 1, wherein a rear surface of the top plate of the frame defines a plurality of receiving spaces for assembling the main board and the electronic components.

8. The notebook computer with an easily disassembled main board as claimed in claim 7, wherein a plurality of screws are located around the main board and screw the main board onto the frame.

9. The notebook computer with an easily disassembled main board as claimed in claim 7, wherein the electronic components comprise a heat sink module, a data access device and a battery received in the receiving spaces, respectively.
